# EUROPEAN PATENT APPLICATION

(11) **EP 2 088 308 A1**
(43) Date of publication of application: **12.08.2009**
(21) Application number: 08151230.3
(22) Date of filing: 08.02.2008
(51) Int. Cl.: F02M 39/00

(54) **Releaseably positioning two rotatable elements relative to each other**

(71) Applicant: Perkins Engines Company Limited, Eastfield Peterborough PE1 5NA (GB)
(72) Inventor: Smith, Paul J., Petersborough Cambs, PE 3 8LH (GB)
(74) Representative: Hatzmann, Martin

(57) **Abstract**

An assembly that may include a first element and a second element rotateable relative to the first element around an axis. The assembly may include a latch member and a biasing member that may be configured to exert a force on the latch member for enabling a first and a second stable position of the latch member relative the first element. The latch member may be movable from the first stable position, in which the latch member may be engageable with the second element so that rotational movement of the first element relative to the second element may at least be inhibited, to the second stable position, in which the latch member may not substantially inhibit rotation of the first element relative to the second element. Also, a method for assembling such an assembly is described.

## Description

### Technical Field

The disclosure relates to releaseably positioning two rotatable elements relative to each other. In a specific embodiment the disclosure relates to mounting a fuel pump having a pump mechanism onto an internal combustion engine having a crankshaft, wherein the pump mechanism has to be angularly positioned, that is timed, relative to an angular position of the crankshaft.

### Background

In many applications it is necessary to temporarily fix the relative rotational position of a first and a second element that may be rotated relative to each other, for example, during mounting of an assembly of the two elements onto a third element. It is known to accomplish fixation with a key or with a set screw, that fixedly connects the first element with the second element. However, under certain circumstances removal of the key or the set screw is problematic, for example, because no space is available to gain access to the key or set screw when the assembly of the first and the second element have been mounted on the third element.

An example of this problem may be the mounting of a high pressure fuel pump on an internal combustion engine. In many cases, such fuel pumps may be driven by a gear that may be driven via a gear assembly or a timing pulley that is connected with a crankshaft of the internal combustion engine. Normally, the gear assembly may be housed in a timing case having a timing case wall and, opposite to that wall a timing case cover. The gear assembly may be positioned between the timing case wall and the timing case cover. The fuel pump may be mounted on the timing case wall. An internal pump mechanism of the fuel pump may have to be angularly positioned, i.e. timed, relative to an angular position of the crankshaft. When an outlet of the pump may be connected with a common rail conduit of the internal combustion engine an accuracy of the timing of the pump relative to the crankshaft of +/- 8 crankshaft degrees may be adequate.

In a first known method of mounting a fuel pump, the cover of the timing case has to be removed. Next, the crankshaft of the engine is fixed in a prescribed angular position. Subsequently, a fuel pump is provided that has a pump shaft that is fixed with a set screw so that an internal pump mechanism of the fuel pump has a prescribed angular position relative to a body part assembly of the pump. Then the pump is mounted on a timing case wall so that the pump shaft protrudes into the timing casing. Subsequently, the gear is mounted on the pump shaft and fixed on the pump shaft by press fitting the gear on an tapered end of the pump shaft with a nut via a side of the timing case that has the timing case cover removed. By doing that, the pump gear may be operatively connected directly or via a timing pulley or intermediate gear assembly with a crankshaft or camshaft gear. By virtue of the fixed pump shaft and the fixed crankshaft, the internal pump mechanism is angularly aligned with angular crankshaft position. Next, the set screw in the fuel pump may be released and the fixation of the crankshaft may be released. Finally, the timing case cover may be replaced.

In a second known method of mounting a fuel pump, the cover of the timing case has to be removed. Next, the crankshaft of the engine is fixed in a prescribed angular position. Subsequently, a fuel pump is provided that has a gear that may be mounted on the pump shaft with a key and a nut so that the angular position of the gear relative to the shaft is determined by the key. A temporary timing pin may extend through the gear into a body part assembly of the fuel pump assembly to angularly fix the internal pump mechanism of the fuel pump in a prescribed angular position. The pump may be mounted on a timing case wall so that the pump shaft protrudes into the timing casing and the gear is operatively connected directly or via a timing pulley or intermediate gear assembly with a crankshaft gear or camshaft gear. By virtue of the fixed crankshaft and the pump gear and, consequently the internal pump mechanism being fixed relative to the body part assembly of the pump, the internal pump mechanism is angularly aligned with the angular crankshaft position. Subsequently, the temporary timing pin may be removed via the side of the timing case that has the timing case cover removed and the fixation of the crankshaft may be released. Finally, the timing case cover may be replaced.

In a third known method of mounting a fuel pump, the fuel pump gear may be mounted on the fuel pump shaft via a key and a nut so that the angular position of the gear relative to the shaft is determined by the key. The pump gear may be provided with a timing mark. The other gears of the gear assembly in the timing case may also be provided with timing marks so that the angular position of the crankshaft may be determined. When mounting the fuel pump on a timing case wall, the timing case cover has to be removed so that the timing marks on the gears are visible. Subsequently, the fuel pump may be mounted on the timing case wall so that the markings of the gears of the gear assembly and of the pump gear are aligned. When the markings are aligned, the internal pump mechanism is in the aligned angular position relative to the angular crankshaft position. Finally, the timing case cover may be replaced.

It is clear from the above that in the examples of the known methods the timing case cover or an inspection cover, mounted on the timing case has to be removed when a fuel pump has to be installed. Especially in service circumstances, this may be inconvenient and time consuming due to the proximity of other parts at the side of the timing case cover, such as radiators or ancillary equipment. Also in other applications access to a fixating member for rotatably fixating a first element relative to a second element of an assembly may be difficult when the assembly has been brought into a mounted position.

The current disclosure aims to alleviate or overcome one or more disadvantages associated with the prior art.

### Summary of the Invention

In one aspect, the disclosure may provide an assembly that may include a first element and a second element rotateable relative to the first element around an axis. The assembly may include a latch member that may be movably connected with the first element and a biasing member that may be connected with the first element and configured to exert a force on the latch member for enabling a first stable position of the latch member relative the first element and a second stable position of the latch member relative the first element. A force that may be exerted on the latch member by the biasing member may increase and decrease when the latch is brought from the first stable position to the second stable position. The latch member may be movable from the first stable position, in which the latch member may be engageable with the second element so that rotational movement of the first element relative to the second element may at least be inhibited, to the second stable position, in which the latch member may not substantially inhibit rotation of the first element relative to the second element.

In another aspect, the disclosure may provide a method for assembling such an assembly. The method may include that the latch member may be placed in the first position. The second element may be positioned and mounted relative to the first element so that the latch member may engage the second element so that rotational movement of the first element relative to the second element may at least be inhibited. The latch member may be brought in the second stable position in which the latch member does not substantially inhibit rotation of the first element relative to the second element.

### Brief Description of the Drawings

Fig. 1 is a schematic cross-sectional view of an embodiment of an assembly with two elements that are rotatable relative to each other;

Fig. 2 is a perspective view of an embodiment of an internal combustion engine;

Fig. 3 is a schematic cross sectional view of an embodiment of an internal combustion engine;

Fig. 4 is a perspective exploded view of an embodiment of a fuel pump and a timing case;

Fig. 5 is a perspective view of an embodiment of a gear train in the timing case of Fig. 4;

Fig. 6 is a schematic cross-sectional view of a first embodiment of fuel pump assembly;

Fig. 7 is a perspective view of an embodiment of a mounting plate of a fuel pump assembly;

Fig. 8 is cross-sectional view over line VIII-VIII from Fig. 1 with a first embodiment of a latch member in a first position;

Fig. 9 is a similar cross-sectional view as shown in Fig. 8 with the embodiment of the latch member in a second position; and

Fig. 10 is a similar cross-sectional view as shown in Fig. 8 of another embodiment of the latch member.

### Detailed Description

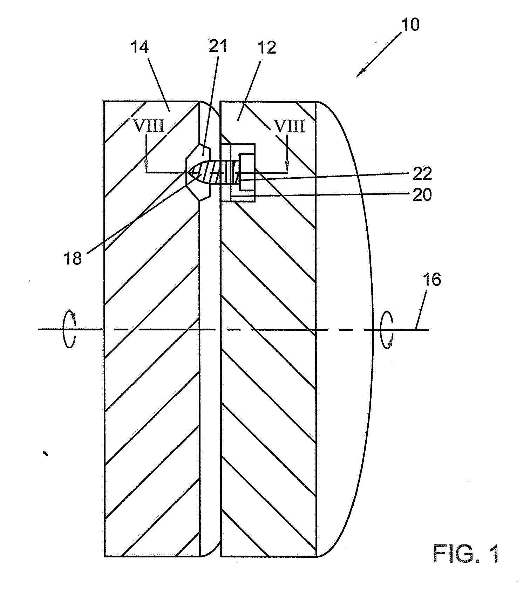

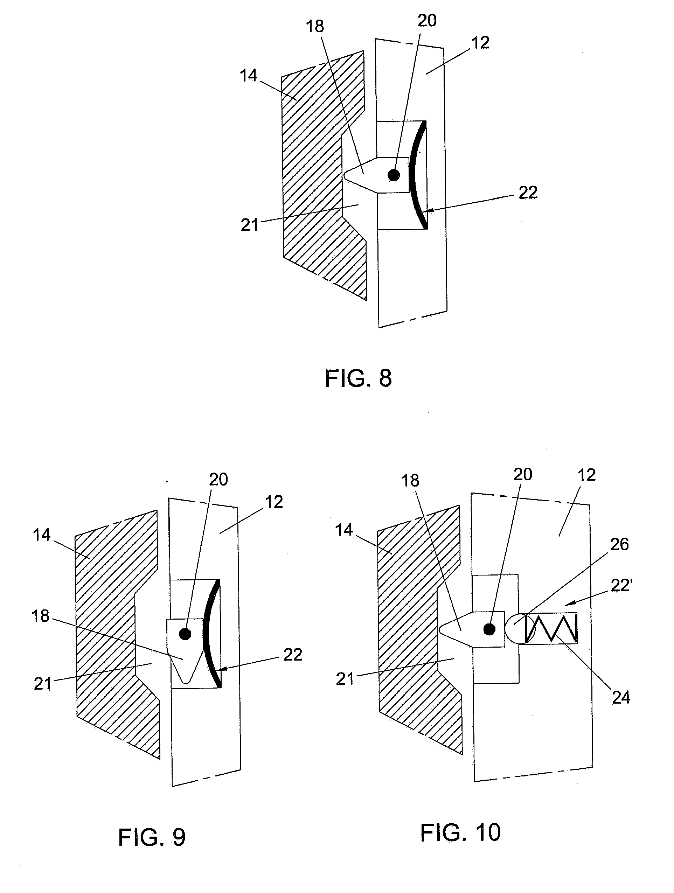

Fig. 1 shows an exemplary embodiment of an assembly 10 that may include a first element 12 and a second element 14 that may be rotatable relative to the first element 12 around an axis 16. A latch member 18 may be movably connected with the first element 12. For example, the latch member 18 may be swivelably mounted on a pivot 20 relative to the first element 12. A biasing member 22 may be connected with the first element 12 and may be configured to exert a force on the latch member 18 for enabling a first stable position of the latch member 18 relative the first element 12 and a second stable position of the latch member 18 relative the first element 12. The biasing member 18 may, for example, be a leaf spring as shown in Figs. 1, 8 and 9. Alternatively, the biasing member may be a biasing assembly 22' of a coil spring 24 and a ball 26. In such embodiment, the ball 26 may be pressed by the coil spring 24 against the latch member 18 as shown in Fig. 10.

Fig. 8 shows a cross section over line VIII-VIII in Fig. 1 of the latch member 18 in a first position and Fig. 9 shows a similar cross section as shown in Fig. 8 in which the latch member 18 is in the second position. The force that may be exerted on the latch member 18 by the biasing member 22 may increase and decreases when the latch 18 is brought from the first stable position to the second stable position. When latch member 18 is brought from the second stable position to the first stable position, the force that may be exerted by the biasing member 22 may increase and subsequently decrease as well. The latch member 18 may be movable from the first stable position (Fig. 8), in which the latch member 18 is engageable with the second element 14 so that rotational movement of the first element 12 relative to the second element 14 may be at least inhibited, to the second stable position (Fig. 9), in which the latch member 18 may not substantially inhibit rotation of the first element 12 relative to the second element 14. The second element 14 may be provided with engaging means with which the latch member 18 may co-operate to at least inhibit the rotational movement of the first element 12 relative to the second element 14. The engaging means may be a notch, a plurality of notches or, as shown in Fig. 1, 8-10 an indentation 21 or any other structural element that may, together with the latch member 18 lead to inhibition of the rotational movement of the first element 12 relative to the second element 14 when the latch member 18 is in the first stable position.

Other embodiments of the latch member 18 and the biasing members 22, 22' than those shown in the Figs. 1, 8-10 may be possible. The biasing member could also be a gas spring, a cantilevered leaf spring or any other type of assembly that exerts a force on the latch member 18 that increases and decreases when the latch member 18 is moved from the first stable position to the second stable position. The latch member 18 may also have more than two stable positions. The latch member 18 may have a different form. Instead of being swivelable around a pivot 20, the latch member 18 may also be slideably mounted in a guide and the biasing member may engage to indents in a side of the slideably mounted latch member 18.

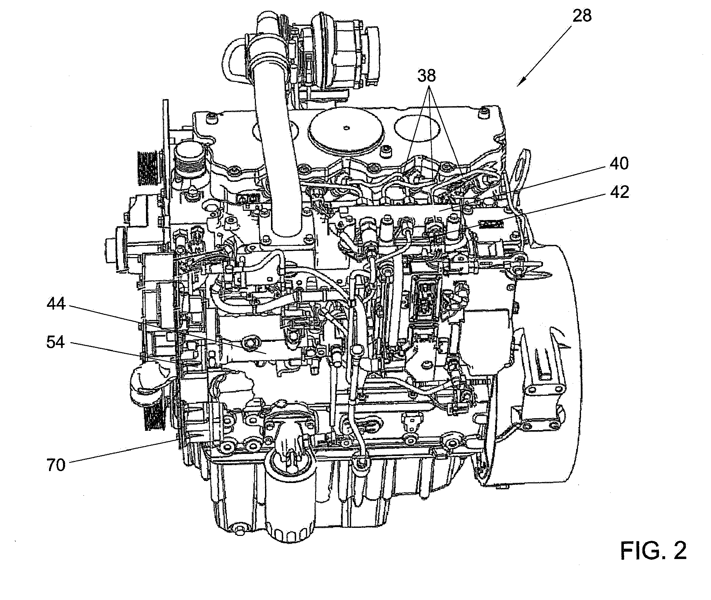

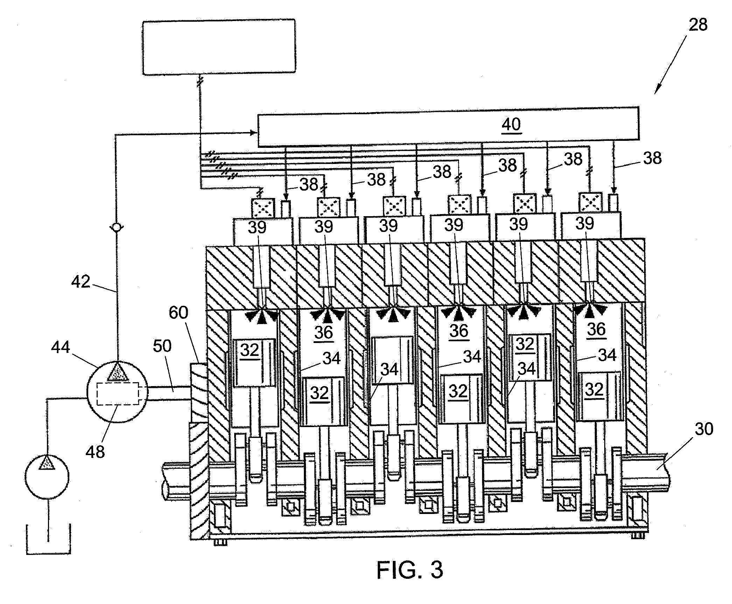

A practical application of an assembly as described above may be used in an internal combustion engine 28. An example of an internal combustion engine 28 is shown in Figs. 2 and 3. The internal combustion engine 28 may be provided with a crankshaft 30 that may be operatively connected to at least one piston 32. The at least one piston 32 may be moveable in an associated cylinder 34. The at least one piston 32 and the associated cylinder 34 may define a combustion chamber 36. Each combustion chamber 36 may be connected to a fuel line 38 via a fuel injector 39. The fuel lines 38 may be connected to a fuel manifold 40, that may be a common rail. The fuel manifold 40 may be supplied with fuel via fuel line 42 that may be connected to the outlet of a high pressure fuel pump assembly 44.

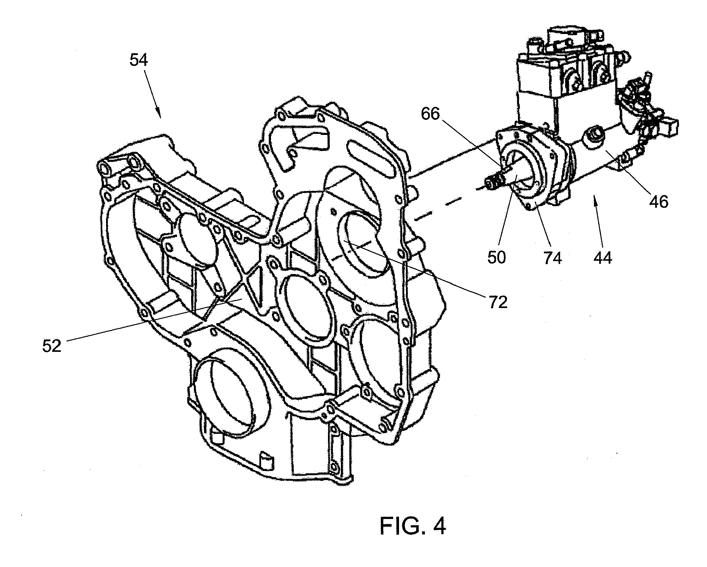

The fuel pump assembly 44, of which an embodiment is shown in Fig. 4, may have a body part assembly 46 and internal pump mechanism 48 that may be driven by a pump shaft 50. In some engines, especially those that are provided with a common rail fuel manifold 40, the supply of fuel may have to be timed with the position of the various pistons 32 in the associated cylinders 34. In other words, the angular position of the internal pump mechanism 48 may have to be positioned relative to the angular position of crankshaft 30 of the internal combustion engine. By doing that, a desired fuel pressure pattern may be obtained in the fuel manifold 40. For an internal combustion engine 28 having a common rail fuel manifold 40, an accuracy of the angular position of the pump mechanism 48 relative to the angular crankshaft position of +/- 8 degrees may suffice.

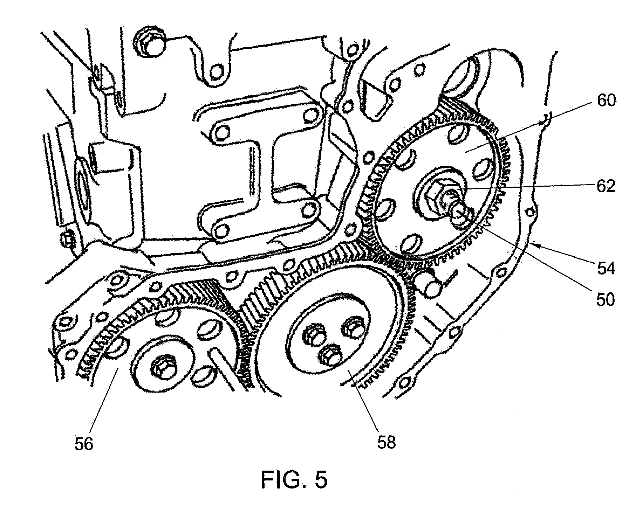

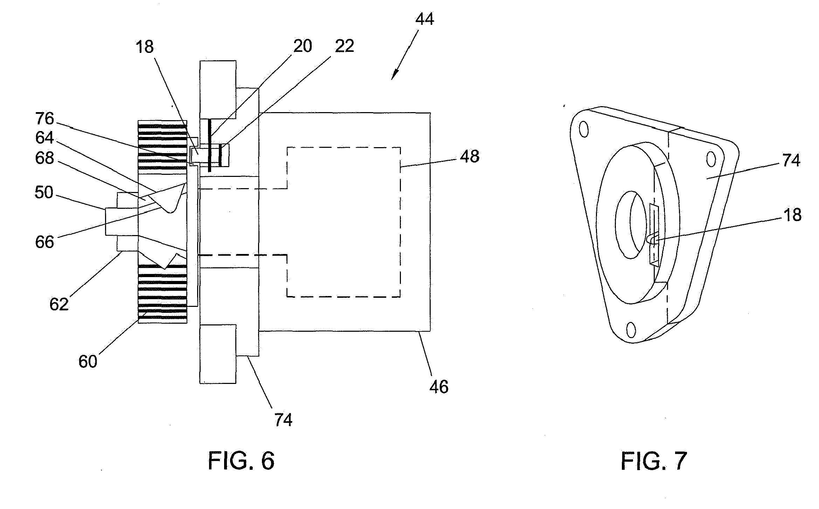

As shown in Fig. 2 and the exploded view of Fig. 4, the fuel pump assembly 44 may be mounted on a wall 52 of a timing case 54. As is visible in Fig. 5, the timing case 54 may contain a gear train. The gear train may include a camshaft gear 56, an idler gear 58 and a fuel pump assembly gear 60. As shown in Fig. 6, the fuel pump assembly gear 60 may be mounted on the pump shaft 50. To that end, the pump shaft 50 may have a tapered part on which the fuel pump assembly gear 60 may be press fit with a nut 62. In order to accurately define the angular position of the fuel pump assembly gear 60 relative to the pump shaft 50, a key 64 may be provided that engages a slot 66 in the pump shaft 50 and a slot 68 in the fuel pump assembly gear 60.

To gain access to the gear train, the timing case 54 may be provided with a timing case cover 70 (see Fig. 2) opposite the timing case wall 52 on which the fuel pump assembly 44 may be mounted. The timing case wall 52 may include an opening 72. The opening 72 in the timing case wall 52 may have a diameter that is greater than the diameter of the fuel pump assembly gear 60. The body part assembly 46 may include a mounting plate 74 that may be used to releaseably mount the fuel pump assembly 44 on the timing case wall 52. The mounting plate 74 may have dimensions that are great enough to close off the opening 72 in the timing case wall 52. An exemplary embodiment of a mounting plate 74 including a latch member 18 is shown in Fig. 7.

In the embodiment of a fuel pump assembly 44 shown in Fig 6, the body part assembly 46 of the fuel pump assembly 44, for example the mounting plate 74 of it, may be considered as the first element of an assembly as described in the opening paragraph of the detailed description. The fuel pump gear 60 may be considered as the second element. Fig. 6 clearly shows that the latch member 18 may be swiveably mounted around pivot 20 in mounting plate 74. An embodiment of the mounting plate 74 that may include a latch member 18 is shown in Fig. 7. The fuel pump gear 60 may have an indentation 21 or another engaging part in which the latch member 18 may extend or that may be engaged by the latch member 18 when it is in the first stable position. Due to the presence of the latch member 18 and the indentation 21 in the fuel pump gear 60, rotation of the fuel pump gear 60 relative to body part assembly 46 may be inhibited. When the latch member 18 is in the second stable position (Fig. 9), rotation of the fuel pump gear 60 relative to the body part assembly may not be substantially inhibited.

Alternatively, the body part assembly 46 of the fuel pump assembly 44, for example the mounting plate 74 of it, may be considered as the second element of an assembly as described in the opening paragraph of the detailed description. The fuel pump gear 60 may be considered as the first element. In that alternative embodiment, the latch member 18 may be mounted in the fuel pump gear 60 and an indentation or other engaging part may be present in the body part assembly 46. When the latch member 18 is in the first stable position, the co-operation of the indentation or engaging present in the body part 46 with the latch member 18 in the fuel pump gear 60 may substantially inhibit rotation of the fuel pump gear 60 relative to the body part assembly 46. When the latch member 18 is in the second stable position (Fig. 9), rotation of the fuel pump gear 60 relative to the body part assembly may not be substantially inhibited.

### Industrial Applicability

For assembling an assembly as described in the opening paragraph of the detailed description, a method may be provided that may include: placing the latch member 18 in the first position; positioning and mounting the second,element 14 relative to the first element 12 so that the latch member 18 engages the second element 14 so that rotational movement of the first element 12 relative to the second element 14 may at least be inhibited. Subsequently, the latch member 18 may be brought in the second stable position in which the latch member 18 does not substantially inhibit rotation of the first element relative to the second element. This method may provide an assembly 10 of which the first element 12 is rotatable around an axis 16 relative to a second element 14. The angular position of the first element 12 relative to the angular position of the second element 14 may be substantially maintained as long as the latch member 18 is in the first stable position because rotational movement of the first element relative to the second element is at least inhibited. When the torque between the first and the second element 12, 14 exceeds a certain value, the latch member 18 may exert a force on the biasing member that is so large that the biasing member 22 is compressed to such an extent that the latch member 18 may move from the first stable position to the second stable position in which the latch member 18 does not substantially inhibit rotation of the first element 12 relative to the second element 14. After that, rotation of the first element 12 relative to the second element 14 may be possible without inhibition by the latch member 18. In other words, the bringing of the latch member 18 from the first stable position to the second stable position may be effected without access to the latch member 18 itself. It may be effected by creating a sufficient torque between the first element 12 and the second element 14.

In a second exemplary embodiment, the method may involve the mounting of a fuel pump on an internal combustion engine. In that embodiment of the method, the first element may be a body part assembly 46 of a fuel pump assembly 44 of an internal combustion engine 28. As described above, the fuel pump assembly 44 may include a pump shaft 50 and an internal pump mechanism 48 driveable with the pump shaft 50. The internal pump mechanism 48 may have to be angularly positioned relative to the crankshaft 30 of the internal combustion engine 28. Such an angular positioning of the internal pump mechanism 48 relative to the crankshaft 30 may be desirable to create a pressure pattern in a fuel manifold 40 that is timed with the movement of the pistons 32 of the internal combustion engine 28. The second element of the assembly may be the fuel pump gear 60 that is mounted on the pump shaft. The method may include: locking the crankshaft 30 at a predetermined angle relative to a top dead centre position of the at least one piston 32; providing a fuel pump assembly 44 that has the latch member 18 on the body part assembly 46 in the first stable position and that has the gear 60 mounted on the pump shaft 50 whereby the latch member 18 in the stable first position engages the gear 60 so that rotational movement of the gear 60 relative to the body part assembly 46 is at least inhibited; mounting the fuel pump assembly 44 on a timing case wall 52 of the internal combustion engine 28; unlocking the crankshaft 32; and bringing the latch member 18 in the second stable position in which the latch member 18 does not substantially inhibit rotation of the gear 60 relative to the body part assembly 46.

In a third exemplary embodiment of mounting a fuel pump assembly 44 on an internal combustion engine 28, the second element may be a body part assembly 46 of a fuel pump assembly 44 of an internal combustion 28. Again, the engine 28 may have a crankshaft 30 that may be operatively connected with at least one reciprocating piston 32. The fuel pump assembly 44 may include a pump shaft 50 and an internal pump mechanism 48 driveable with the pump shaft 50 that has to be angularly positioned relative to the crankshaft 30. The first element may be the pump gear 60 that is mountable on the pump shaft 50. The exemplary embodiment of the method may include: locking the crankshaft 30 at a predetermined angle relative to a top dead centre position of the at least one piston 32; providing a fuel pump assembly 44 that has the latch member 18 on the gear 60 in the first stable position and that has the gear 60 mounted on the pump shaft 50 whereby the latch member 18 in the stable first position may engage the body part assembly 46 so that the rotational movement of the gear 60 relative to the body part assembly 46 may at least be inhibited; mounting the fuel pump assembly 44 on a timing case wall 52 of the internal combustion engine 28; unlocking the crankshaft 30; and bringing the latch member 18 in the second stable position in which the latch member 18 does not substantially inhibit rotation of the pump gear 60 relative to the body part assembly 46.

By virtue of the presence of the latch member 18 rotation of the pump shaft 50 relative to the body part assembly 46 may be prevented. Consequently, the internal pump mechanism 48 may be maintained in the same position during the assembly operation of the fuel pump assembly 44 on the combustion engine 28. In view of the fact that the position of the crankshaft 30 may be locked during the assembly operation, the angular position of the crankshaft 30 and the angular position of the internal pump mechanism 48 relative to each other may be maintained as desired. Once the pump gear 60 engages the idler gear 58 that is in engagement with the camshaft gear, the crankshaft 30 may be unlocked. By rotating the crankshaft 30, the second element, i.e. the pump gear 60 in the second embodiment and the body part assembly 46 in the third embodiment, may exert a force on the latch member 18. When this force is large enough, the biasing member 22 may be compressed so that the latch member 18 may move from the first stable position to the second stable position in which rotation of the pump gear 60 relative to the body part assembly 46 is substantially not inhibited. Thus, without the necessity to have access to the inside of the timing case 54, fuel pump assembly 44 may be mounted in timed relation to the crankshaft 30.

Such a mounting may even be effected without the necessity to remove a timing case cover 70. To that end, the timing case wall 52 may have an opening 72 of which the diameter is larger than the diameter of the fuel pump gear 60. The body part assembly 46 may include a mounting plate 74. The mounting of the fuel pump assembly 44 on the timing case 54 may involve moving the gear 60 that is mounted on the pump shaft 50 of the fuel pump assembly 44 through the opening 72 in the timing case wall 52 and connecting the mounting plate 74 to the timing case wall 52. The mounting plate may have such dimensions that it may close off the opening 72 in the timing case wall 52.

Because removal of the timing case cover 70 is no longer necessary, the exchange of a fuel pump with another fuel pump may be done very quickly. This is also due to the fact that in many instances, the removal of the timing case cover may also necessitate the removal of a radiator and other ancillary equipment. This may involve a lot of labor, that may now be spared by virtue of the assemblies and methods disclosed herein.

It will be clear that the assembly with the first and second element that are rotateable relative to each other and the latch member that may automatically be brought form a first stable rotation inhibiting position to a second stable rotation non-inhibiting position may be applied in other circumstances. One example might be the mounting on an engine of a camshaft unit carrying a camshaft gear, which camshaft has to be timed relative to crankshaft.

It will be apparent to those having ordinary skill in the art that various modifications and variations can be made to the releaseably positioning of two rotateable elements relative to each other as disclosed herein. Other embodiments will be apparent to those having ordinary skill in the art from consideration of the specification. It is intended that the specification and examples are being considered as exemplary only. Other aspects, features and advantages will be apparent upon an examination of the attached drawings and appended claims.

## Claims

1. An assembly comprising:
a first element;
a second element rotateable relative to the first element around an axis;
a latch member movably connected with the first element; and
a biasing member connected with the first element and configured to exert a force on the latch member for enabling a first stable position of the latch member relative the first element and a second stable position of the latch member relative the first element;
wherein:
the force exerted on the latch member by the biasing member increases and decreases when the latch is brought from the first stable position to the second stable position; and
the latch member is movable from the first stable position, in which the latch member is engageable with the second element so that rotational movement of the first element relative to the second element is at least inhibited, to the second stable position, in which the latch member does not substantially inhibit rotation of the first element relative to the second element.

2. The assembly according to claim 1, wherein the latch member is swivelably mounted on a pivot relative to the first element.

3. The assembly according to claim 1 or 2, wherein the biasing member is a leaf spring.

4. The assembly of any one of claims 1-3, wherein the biasing member includes a coil spring and a ball, the ball being pressed by the coil spring against the latch member.

5. An internal combustion engine comprising an assembly according to any one of claims 1-4.

6. The internal combustion engine according to claim 5, wherein the first element is part of a body part assembly of a fuel pump assembly and wherein the second element is a fuel pump gear mounted on a fuel pump shaft of the fuel pump assembly.

7. The internal combustion engine according to claim 5, wherein the first element is a fuel pump gear mounted on a fuel pump shaft of a fuel pump assembly and wherein the second element is part of a body part assembly of the fuel pump assembly.

8. The internal combustion engine according to claim 6 or 7, wherein a mounting plate is part of the pump body part assembly and is releaseably mounted on a timing case wall of the internal combustion engine.

9. The internal combustion engine of claim 8, wherein the timing case wall has an opening having a diameter that is greater than the diameter of the pump gear, wherein the mounting plate closes off the opening when mounted on the timing case wall.

10. The internal combustion engine of any one of claims 6-9, wherein the internal combustion engine includes a crankshaft and at least one reciprocating piston operatively connected to the crankshaft, the fuel pump including a pump mechanism driveable with the pump shaft that has to be angularly positioned relative to the crankshaft.

11. The internal combustion engine of claim 10, wherein the engine is provided with a common rail fuel manifold, wherein the fuel pump is connected with a fuel outlet to the common rail fuel manifold.

12. A method for assembling an assembly, the assembly including:
a first element;
a second element rotateable relative to the first element around an axis;
a latch member movably connected with the first element; and
a biasing member connected with the first element and configured to exert a force on the latch member for enabling a first stable position of the latch member relative the first element and a second stable position of the latch member relative the first element;
wherein:
the force exerted on the latch member by the biasing member increases and decreases when the latch is brought from the first stable position to the second stable position, wherein the method comprises:
• placing the latch member in the first position;
• positioning and mounting the second element relative to the first element so that the latch member engages the second element so that rotational movement of the first element relative to the second element is at least inhibited; and
• bringing the latch member in the second stable position in which the latch member does not substantially inhibit rotation of the first element relative to the second element.

13. The method according to claim 12, wherein the first element is a body part assembly of a fuel pump assembly of an internal combustion engine having a crankshaft that is operatively connected with at least one reciprocating piston, wherein the fuel pump assembly includes a pump shaft and an internal pump mechanism driveable with the pump shaft that has to be angularly positioned relative to the crankshaft, the second element being a gear that is mountable on the pump shaft, the method comprising:
• locking the crankshaft at a predetermined angle relative to a top dead centre position of the at least one piston;
• providing a fuel pump assembly that has the latch member on the body part assembly in the first stable position and that has the gear mounted on the pump shaft whereby the latch member in the stable first position engages the gear so that rotational movement of the gear relative to the body part assembly is at least inhibited;
• mounting the fuel pump assembly on a timing case wall of the internal combustion engine;
• unlocking the crankshaft; and
• bringing the latch member in the second stable position in which the latch member does not substantially inhibit rotation of the gear relative to the body part assembly.

14. The method according to claim 12, wherein the second element is a body part assembly of a fuel pump assembly of an internal combustion engine having a crankshaft that is operatively connected with at least one reciprocating piston, wherein the fuel pump assembly includes a pump shaft and an internal pump mechanism driveable with the pump shaft that has to be angularly positioned relative to the crankshaft, the first element being a gear that is mountable on the pump shaft, the method comprising:
• locking the crankshaft at a predetermined angle relative to a top dead centre position of the at least one piston;
• providing a fuel pump assembly that has the latch member on the gear in the first stable position and that has the gear mounted on the pump shaft whereby the latch member in the stable first position engages the body part assembly so that the rotational movement of the gear relative to the body part assembly is at least inhibited;
• mounting the fuel pump assembly on a timing case wall of the internal combustion engine;
• unlocking the crankshaft; and
• bringing the latch member in the second stable position in which the latch member does not substantially inhibit rotation of the gear relative to the body part assembly.

15. The method according to claim 13 or 14, the body part assembly including an mounting plate, the timing case wall having an opening of which the diameter is larger than the diameter of the gear, wherein the mounting of the fuel pump assembly on the timing case involves moving the gear that is mounted on the pump shaft of the fuel pump assembly through the opening in the timing case wall and connecting the mounting plate to the timing case wall, the mounting plate closing off the opening in the timing case wall.

16. The method according to claim 13 or 14, wherein the bringing of the latch member in the second stable position is effected by rotating the crankshaft of the engine and consequently rotating the fuel pump gear relative to the fuel pump body.
